# EUROPEAN PATENT SPECIFICATION

(11) **EP 2 528 970 B1**
(45) Date of publication and mention of the grant of the patent: **29.07.2015**
(21) Application number: 11700861.5
(22) Date of filing: 27.01.2011
(51) Int. Cl.: C08L 23/04, C08L 23/08

(54) **IMPROVING HOMOGENEITY IN POLYETHYLENE BLENDS**
POLYETHYLENFORMUNGSZUSAMMENSETZUNGEN MIT VERBESSERTEM SPANNUNGSRISS/STEIFHEITS-VERHÄLTNIS UND VERBESSERTER SCHLAGFESTIGKEIT
COMPOSITION DE MOULAGE AU POLYÉTHYLÈNE DOTÉE D'UN RAPPORT FISSURE DE CONTRAINTE/RIGIDITÉ ET D'UNE RÉSISTANCE AUX CHOCS AMÉLIORÉS

(30) Priority: 29.01.2010 EP 10250136
(43) Date of publication of application: 05.12.2012
(73) Proprietor: Borealis AG, 1220 Vienna (AT)
(72) Inventor: DIX, Albrecht, N-3676 Notodden (NO); BURYAK, Andrey, A-4020 Linz (AT); PAKKANEN, Anneli, FIN-01120 Västerskog (FI); VAHTERI, Markku, FIN-06100 Porvoo (FI); DELGADILLO, Omar, H2K4B8 Montreal, Quebec (CA)
(74) Representative: Campbell, Neil Boyd
(86) International application number: PCT/EP2011/051175
(87) International publication number: WO 2011/092266

(56) References cited:
- EP-A1- 0 989 140
- EP-A1- 1 655 334
- WO-A2-2007/022908

## Description

The present invention concerns a method for improving homogeneity of polyethylene blends. The invention also concerns polyethylene blends with improved homogeneity, in particular a blend comprising three ethylene polymer fractions having distinct molecular weights.

Such blends are particularly suitable for the production of pipes, for moulding applications, and wire and cable applications.

Polyethylene blends and composites, where different polymers are blended to combine the positive attributes of each component polymer (i.e. impact strength, rigidity, chemical resistance, etc.), are widely used in many application fields, like for producing pipes or films.

Polyethylenes which have high molecular weight generally have improved mechanical properties over their lower molecular weight counterparts. However, as the molecular weight of the polyethylene increases, the processability of the resin usually decreases. By providing a blend of polymers of high molecular weight and low molecular weight, the properties characteristic of high molecular weight resins can be retained and processability, particularly extrudability (a characteristic of the lower molecular weight component), can be improved.

Unfortunately, for such bimodal polymers comprising more than one polymer fraction with different molecular weight, e.g. a low molecular weight (LMW) fraction and a high molecular weight (HMW) fraction, lack of homogeneity is known to be a critical property. For example, low degrees of homogeneity adversely affect the surface properties and other properties of the polymer composition. To obtain a sufficient degree of homogeneity, mixing of the different fractions in the composition must be achieved on the microscopic scale.

When compounding bimodal polymer compositions, e.g. for the production of pipes, so-called "white spots" often occur in the compounded material. These white spots usually have a size of below 10 to about 50 micrometer and consist of high molecular weight polymer particles that have not been adequately compounded in the composition. Further, when compounding polymer compositions e.g. for the production of films, gel particles with a size of about 0.01 to 1 mm often occur. These gel particles also consist of high molecular weight polymer particles not adequately compounded and appear as disfiguring inhomogeneities in the finished film. Still further, inhomogeneities in bimodal polymer compositions may also cause warpage of the surface of articles produced therefrom.

It is known that homogeneity of bimodal polymer compositions can be improved by applying multiple compounding steps and/or particular compounding conditions to the resin coming from the reactor. These measures, however, have the disadvantage that they are associated with a significant increase in production costs for the composition.

The phase behaviour of polyethylene (PE) blends which differ in their crystallinity has been studied extensively and a substantial amount of work has been published in this area. The general rule is that the blends having low HMW fraction content show signs of phase segregation. The actual limits of miscibility will depend on the extrusion equipment and conditions as well as on the components' nature (molecular weight and comonomer content).

For example Krishnaswamy and Yang (Polymer 48, 2007, 5348-5354) studied the phase segregation behaviour for melt-extruded blends of SSC (single site catalyst) ethylene homopolymers. Phase segregation was observed for the blends where the HMW fraction was the minor component. The limits of phase segregation were found to depend on the molecular weight of HMW fraction - the lower the HMW molecular weight, the larger the miscibility window. For example, blends with <40% of HMW (MW ~350 kg/mol) were found immiscible (the molecular weight of LMW component was ~37 kg/mol). That leaves a relatively small operating window which the present invention seeks to extend.

It is, therefore, an object of the present invention to provide blends comprising a low molecular weight (LMW) fraction and a high molecular weight (HMW) fraction with improved homogeneity. These polyethylene blends have improved homogeneity, and thus improved properties, in particular surface properties. At the same time, the composition should have good processing and good mechanical properties. A further object of the present invention is thus a method to broaden the miscibility window for blending a low molecular weight (LMW) fraction and a high molecular weight (HMW) fraction.

Surprisingly, these goals can be achieved by adding a medium molecular weight fraction to a blend of a low molecular weight fraction and a high molecular weight fraction.

Thus, the present invention provides in a first embodiment a polyethylene blend consisting essentially of three ethylene homo- or copolymer fractions (A), (B) and (C) having distinct molecular weights:
A) 10 to 50 wt% of a low molecular weight homo- or copolymer fraction with a weight average molecular weight M_{w} below 40 kg/mol;
B) 18 to 60 wt%, preferably 5 to 40 wt% of a high molecular weight homo- or copolymer fraction with a weight average molecular weight M_{w} above 250 kg/mol and
C) 10 to 70 wt% of a medium molecular weight homo- or copolymer fraction with a weight average molecular weight M_{w} in the range of 100 to 200 kg/mol;
whereby the polyethylene blend has a single melting peak, as determined by differential scanning calorimetry (DSC).

In another embodiment, the invention provides in a first embodiment a polyethylene blend consisting essentially of three ethylene homo- or copolymer fractions (A), (B) and (C) having distinct molecular weights:
A) 10 to 50 wt% of a low molecular weight homo or copolymer fraction with a weight average molecular weight M_{w} below 40 kg/mol;
B) 18 to 40 wt% of a high molecular weight homopolymer fraction with a weight average molecular weight M_{w} above 250 kg/mol and a density of greater than 940 kg/m³; and
C) 10 to 70 wt% of a medium molecular weight homo- or copolymer fraction with a weight average molecular weight M_{w} in the range of 100 to 200 kg/mol;
whereby the polyethylene blend has a single melting peak, as determined by differential scanning calorimetry (DSC).

In a further embodiment, the invention provides a method to improve the homogeneity of a polyethylene blend comprising mixing three ethylene homo- or copolymer fractions (A), (B) and (C) having distinct molecular weights:
A) 10 to 50 wt% of a low molecular weight homo- or copolymer fraction with a weight average molecular weight M_{w} below 40 kg/mol;
B) 18 to 60 wt% of a high molecular weight homo- or copolymer fraction with a weight average molecular weight M_{w} above 250 kg/mol and
C) 10 to 70 wt% of a medium molecular weight homo- or copolymer fraction with a weight average molecular weight M_{w} in the range of 100 to 200 kg/mol.
whereby the polyethylene blend has a single melting peak, as determined by differential scanning calorimetry (DSC).

In a further embodiment the present invention provides a method to expand the miscibility window for blending a low molecular weight homo- or copolymer fraction A) with a weight average molecular weight M_{w} below 40 kg/mol and a high molecular weight homo- or copolymer fraction B) with a weight average molecular weight M_{w} above 250 kg/mol, by adding a medium molecular weight homo- or copolymer fraction C) with a weight average molecular weight M_{w} in the range of 100 to 200 kg/mol,
so that the polyethylene blend comprises 10 to 50 wt% of fraction A), 5 to 60 wt% of fraction B) and 10 to 70 Wt% of fraction C) and whereby the polyethylene blend has a single melting peak, as determined by differential scanning calorimetry (DSC).

Viewed from another aspect the invention provides a composition comprising a blend as hereinbefore defined.

Viewed from another aspect the invention provides an article comprising the blend as hereinbefore defined such as a film, moulding, wire cable or pipe.

Viewed from another aspect the invention provides a process for the preparation of a polyethylene blend as hereinbefore defined comprising blending:
A) 10 to 50 wt% of a low molecular weight homo- or copolymer fraction with a weight average molecular weight M_{w} below 40 kg/mol;
B) 18 to 60 wt% of a high molecular weight homo- or copolymer fraction with a weight average molecular weight M_{w} above 250 kg/mol and
C) 10 to 70 wt% of a medium molecular weight homo- or copolymer fraction with a weight average molecular weight M_{w} in the range of 100 to 200 kg/mol so as to form a blend having a single melting peak, as determined by differential scanning calorimetry (DSC).

Viewed from another aspect the invention provides a polyethylene blend consisting essentially of three ethylene homo- or copolymer fractions (A), (B) and (C) having distinct molecular weights:
A) 10 to 50 wt% of a lower molecular weight homo- or copolymer fraction with a weight average molecular weight M_{w} below 40 kg/mol;
B) 18 to 60 wt%, preferably 18 to 40 wt% of a higher molecular weight homo- or copolymer fraction with an MFR_{190/21} of less than 10 g/10min; and
C) 10 to 70 wt% of a medium molecular weight homo- or copolymer fraction with an MFR_{190/21} greater than that of fraction B and being in the range of 5 to 50 g/10min;
whereby the polyethylene blend has a single melting peak, as determined by differential scanning calorimetry (DSC).

### Detailed description of invention

Wherever the term "molecular weight" is used herein, the weight average molecular weight is meant.

Fractions A, B and C form the entirety of the polyolefinic components in the polyethylene blend according to the invention. The combination of components A, B and C alone (without any other additional components such as additives) will be called the base resin from hereon. The wt% totals of fractions A, B and C in the base resin should add up to 100 wt%.

The blend of the invention may consist of said base resin or consist essentially of said base resin (i.e. the only components present are the base resin and optionally additives). Any figures quoted above or below in relation to the properties of the blend may also be applied to the base resin. Where additives are present, the properties of the blend are quoted with additives present.

Usually the base resin makes up at least 90 wt% of the total blend, preferably at least 95 wt%.

The blend of the invention may contain usual additives for utilization with polyolefins, such as pigments (for example carbon black), stabilizers (antioxidant agents), antacids and/or anti-UVs, antistatic agents and utilization agents (such as processing aid agents). Thus the blend of the invention contains the three fractions and optionally one or more additives. This is what is meant by consisting essentially of herein. Preferably, the amount of these additives is 10 wt% or below, further preferred 8 wt% or below, of the blend.

Preferably, the blend comprises carbon black in an amount of 8 wt% or below, further preferred of 1 to 4 wt%, of the total weight of the blend.

Further preferred, the amount of additives different from carbon black is 1 wt% or less, more preferably 0.5 wt% or less.

The properties of each polymer fraction are defined in more detail below.

### Fraction A

Fraction A) is a low molecular weight (LMW) homo- or copolymer fraction A) with a weight average molecular weight M_{w} below 40 kg/mol. The lower limit for M_{w} of the LMW fraction is preferably 1 kg/mol. Preferably, the LMW fraction A has a weight average molecular weight of 15 to 40 kg/mol, more preferably 20 to 30 kg/mol.

The MFR_{190/2} according to ISO 1133 of fraction A is preferably at least 50 g/10min, more preferably at least 100 g/10min. The upper limit for the MFR₂ of the LMW fraction is preferably 1000 g/10min.

In one embodiment, e.g. when the LMW component is a homopolymer, the density according to ISO 1183 at 23°C of the fraction A is higher than 940 kg/m³, preferably 940 to 975 kg/m³. Alternative preferred ranges are 955 to 975 kg/m³, preferably 965 to 975 kg/m³.

In another embodiment, e.g. when the LMW component is a copolymer, the density according to ISO 1183 at 23°C of the fraction A is less than 940 kg/m³, preferably 910 to 935 kg/m³.

The term ethylene copolymer as used herein is intended to encompass polymers comprising repeat units deriving from ethylene and at least one C₃-C₁₀ copolymer. Preferred copolymers are binary and therefore comprise ethylene and a single comonomer.

The comonomers which can be employed include C₃₋₁₀ alpha olefins, preferably selected from but-1-ene, hex-1-ene, 4-methyl-pent-1-ene, hept-1-ene, oct-1-ene, and dec-1-ene, more preferably but-1-ene and hex-1-ene. Preferably hexene or butene, or a mixture of hexene and butene is used. In one embodiment of the invention only one comonomer is used. The comonomer is e.g. hexene or butene, preferably hexene.

Preferably, the ethylene copolymers contain 1 to 15 wt%, based on the weight of the low molecular weight ethylene fraction, of comonomer, preferably 2 to 12 wt% and more preferably 5 to 10 wt%.

The term homopolymer as used herein is intended to encompass polymers which consist essentially of repeated units deriving from ethylene. Homopolymers may, for example, comprise at least 99.8 wt%, preferably at least 99.9 wt%, of repeat units deriving from ethylene. More preferably only ethylene units are detectable in the homopolymer.

Preferably the LMW fraction A) is a copolymer, more preferably an ethylene-hexene copolymer.

### Fraction B

Fraction B) is a high molecular weight (HMW) homo- or copolymer fraction with a weight average molecular weight M_{w} above 250 kg/mol, preferably above 280 kg/mol. The upper limit for M_{w} of the HMW fraction is preferably 500 kg/mol.

The MFR_{190/2} according to ISO 1133 of fraction B) is preferably less than 1 g/ 10 min, preferably of less than 0.5 g/10 min and more preferably less than 0.1 g/10 min.

The MFR_{190/21} according to ISO 1133 of fraction B) is preferably less than 10 g/ 10 min, preferably of less than 5 g/10 min and more preferably less than 1 g/10 min.

The density according to ISO 1183 at 23°C of the HMW-fraction is in the range of 900 to 970 kg/m³, preferably 920 to 960 kg/m³, especially 940 to 950 kg/m³. The density may be greater than 940 kg/m³.

The terms copolymer and homopolymer are defined as described above. Preferably the HMW fraction B) is a homopolymer.

### Fraction C

Fraction C) is a medium molecular weight (MMW) homo- or copolymer fraction with a weight average molecular weight M_{w} in the range of 100 to 200 kg/mol, preferably 110 to 180 kg/mol, more preferably 120 to 160 kg/mol.

Fraction C preferably has an MFR_{190/2} of less than 10 g/ 10 min, preferably of less than 5 g/10 min and more preferably less than 1 g/10 min. The MFR_{190/2} and/or MFR_{190/21} of fraction C should be less than that of fraction A but higher than that of fraction B. Fraction C preferably has an MFR_{190/21} in the range of 5 to 50 g/10min, preferably 10 to 20 g/10min.

The density according to ISO 1183 at 23°C of the MMW-fraction is in the range of 920 to 970 kg/m³, preferably 940 to 960 kg/m³.

The terms copolymer and homopolymer are defined as described above. Preferably the MMW fraction C) is a homopolymer.

### Amounts of fractions

It is preferred if the lower molecular weight component fraction (A) does not form the largest component of the blend. Thus the weight percentage of either fraction B or fraction C (or both) should preferably exceed that of fraction A. Preferably the weight percentage of fraction B is the same as or exceeds that of fraction A.

Preferably, each component should contribute at least 15 wt% of the composition, e.g. more than 15 wt% such as at least 16 wt%, preferably at least 18wt%. In particular, it is preferred if fraction B forms at least 18 wt% of the blend.

Preferred ranges for fraction A are 15 to 45 wt%, more preferably, 20 to 40 wt%.

It is highly preferred if the HMW fraction makes up less than 30 wt% of the overall blend, preferably less than 25 wt%. Preferred ranges include 18 to 20 wt% and 18 to 25 wt%.

The amount of fraction C may range from 15 to 65 wt%, preferably 20 to 60 wt%, especially 20 to 40 wt%.

### The blend

As noted above, the blend of the invention is formed from fractions A, B and C alone (other than standard additives). The blend may have a density in the range 920 to 970 kg/m³, preferably 930 to 960 kg/m³.

The blend may also have an MFR₂ of 0.1 to 5 g/10min, preferably 0.1 to 3 g/10min.

The combination of the three components in the blend gives improved homogeneity. The homogeneity of a blend containing a LMW-fraction A) and a HMW-fraction B) is therefore improved by adding a MMW-fraction C.

According to the second embodiment the miscibility window for blending a LMW-fraction A) with a HMW-fraction B) is expanded by adding a MMW-fraction C. By miscibility window is meant that the percentage ranges over which a miscible blend can be prepared are enlarged using the use of the MMW component proposed herein.

The principal analytical technique used to determine miscibility is DSC. If two components are blended inhomogeneously, a mixture will typically exhibit two melting points corresponding to the melting point of each component. Thus, in a binary blend of a HMW and LMW component, it is often the case that the blend exhibits a melting point corresponding to each fraction due to the inhomogenous nature of the blend.

When a single crystallization peak appears during crystallization and a single melting peak appears (typically in between the melting points of the components) as the temperature of the crystallized mixture is being raised, the mixture is judged to be a miscible blend. Without wishing to be limited by theory, it is believed that in the crystalline region the two components have formed co-crystals thus making a single melting point inevitable. The blend of the invention is designed therefore to exhibit a single melting point under DSC.

The formed composition is determined to have only a single significant melting point. For purposes of this invention, having only a single significant point means that there is no other peak on the DSC curve with an intensity of more than 10% of the main melting peak, preferably of more than 5%. The intensity of the melting peaks, if observed, are determined by known DSC methods as described in the examples which follow. In particular, the intensity of the major and any minor peaks in DSC are determined by heat of fusion integrated over the melting ranges of the individual peaks.

Preferably the composition has only one melting point and no other discernible melting point at all.

It is also preferred if blends of the invention show only one crystallization peak, indicating the existence of one type of crystal species on cooling. It would appear therefore, that cocrystallization took place. Preferred melting temperatures, Tm, show a gradual increase from 127.0 to 134.1°C with an increase in HMW content. It indicates that the blends are very similar to a single-component system. It is preferred therefore if the melting temperature of the blend is in the range 127 to 135°C.

It is a further feature of the invention that rheology is not used to determine inhomogeneity. The inventors have surprisingly found that the use of DSC is better at identifying inhomogeneous blends than rheological measurements.

### Manufacture

Where herein features of fractions (A), (B) and (C) of the composition of the present invention are given, these values are generally valid for the cases in which they can be directly measured on the respective fraction, e.g. when the fraction is separately produced or produced in the first stage of a multistage process.

However, the base resin may also be and preferably is produced in a multistage process wherein e.g. fractions (A), (B) and (C) are produced in subsequent stages. In such a case, the properties of the fractions produced in the second and third step (or further steps) of the multistage process can either be inferred from polymers, which are separately produced in a single stage by applying identical polymerisation conditions (e.g. identical temperature, partial pressures of the reactants/diluents, suspension medium, reaction time) with regard to the stage of the multistage process in which the fraction is produced, and by using a catalyst on which no previously produced polymer is present. Alternatively, the properties of the fractions produced in a higher stage of the multistage process may also be calculated, e.g. in accordance with B. Hagström, Conference on Polymer Processing (The Polymer Processing Society), Extended Abstracts and Final Programme, Gothenburg, August 19 to 21, 1997, 4:13.

Thus, although not directly measurable on the multistage process products, the properties of the fractions produced in higher stages of such a multistage process can be determined by applying either or both of the above methods. The skilled person will be able to select the appropriate method.

The manner in which the polyethylene moulding composition of the invention is produced is not critical to the present invention. The composition can be produced by mechanical blending of the individual fractions, by reactor or *in-situ* blending, by combinations of these two processes or other means which achieve proper homogenization.

For example, the composition can be prepared by mechanical blending of the three fractions in the desired amount, e.g. using a conventional compounding or blending apparatus, like a Banbury mixer, a 2-roll rubber mill, Buss-co-kneader or a twin screw extruder. In this case it has to be ensured that proper homogenization is achieved.

Fractions A, B and C used for mechanical blending are prepared separately with any conventional ethylene homo- respectively co-polymerization method, e.g. in gas phase, slurry phase, liquid (bulk) phase using conventional reactors, such as loop reactor, gas phase reactor, semi-batch or batch reactor, in the presence of a polymerization catalyst. Preferably, the fractions are produced in a slurry reaction, preferably in a loop reactor, or in a gas phase reaction.

The composition can also be produced by *in-situ* blending at least two of the three fractions or all three fractions. By *in-situ* blending, production of a multimodal polymer is meant wherein the fractions are produced either simultaneously in one reaction stage (e.g. by using different catalysts) and/or are produced in a multistage process.

A multistage process is defined to be a polymerization process in which a polymer comprising two or more fractions is produced by producing each or at least two polymer fraction(s) in a separate reaction stage, usually with different reaction conditions in each stage, in the presence of the reaction product of the previous stage which comprises a polymerization catalyst. The polymerization reactions used in each stage may involve conventional ethylene homopolymerization or copolymerization reactions, e.g. gas-phase, slurry phase, liquid phase polymerizations, using conventional reactors, e.g. loop reactors, gas phase reactors, stirred tank reactors, batch reactors etc. (see for example WO97/44371 and WO96/18662).

Thus, the multimodal polyethylene moulding composition of the invention can be prepared via a multistage reaction sequence comprising successive polymerization steps carried out under predetermined different reaction conditions in respective reactors arranged in series so as to obtain respective polyethylene fractions having different molecular weights. A process of this type can be performed in a suspension medium: in this case, monomers and a molar mass regulator, preferably hydrogen, are firstly polymerized in a first reactor under first reaction conditions in the presence of a suspension medium and a suitable catalyst, then transferred to a second reactor and further polymerized under second reaction conditions, and further transferred to a third reactor and further polymerized under third reaction conditions, with the first reaction conditions differing from the second and third reaction conditions so as to obtain three polyethylene fractions having different molecular weights.

In each production method a polymerization catalyst is used. The polymerization catalysts include coordination catalysts of a transition metal, such as Ziegler-Natta (ZN), metallocenes, non-metallocenes, Cr-catalysts etc. The catalyst may be supported, e.g. with conventional supports including silica, Al-containing supports and magnesium dichloride based supports.

Preferably the catalyst is a metallocene catalyst. The preparation of the metallocene catalyst can be carried out according to or analogously to the methods known from the literature and is within the skills of an art skilled person.

Said metallocenes bear at least one organic ligand, generally 1, 2 or 3, e.g. 1 or 2, which is η -bonded to the metal, e.g. a η²⁻⁶-ligand, such as a η⁵-ligand. Preferably, a metallocene is a Group 4 to 6 transition metal, suitably titanocene, zirconocene or hafnocene, which contains at least one η⁵-ligand, which is e.g. an optionally substituted cyclopentadienyl, an optionally substituted indenyl, an optionally substituted tetrahydroindenyl or an optionally substituted fluorenyl.

The metallocene compound may have a formula I:

(Cₚ)ₘTₙMA_{q} (I)

wherein:
each Cp independently is an unsubstituted or substituted and/or fused homo- or heterocyclopentadienyl ligand, e.g. substituted or unsubstituted cyclopentadienyl, substituted or unsubstituted indenyl or substituted or unsubstituted fluorenyl ligand; the optional one or more substituent(s) being selected preferably from halogen, hydrocarbyl (e.g. C₁-C₂₀-alkyl, C₂-C₂₀-alkenyl, C₂-C₂₀-alkynyl, C₃-C₁₂-cycloalkyl, C₆-C₂₀-aryl or C₇-C₂₀-arylalkyl), C₃-C₁₂-cycloalkyl which contains 1, 2, 3 or 4 heteroatom(s) in the ring moiety, C₆-C₂₀-heteroaryl, C₁-C₂₀-haloalkyl, -SiR"3, -OSiR", -SR", -PR"2 or -NR"2, each R" is independently a hydrogen or hydrocarbyl, e.g. C₁-C₂₀-alkyl, C₂-C₂₀-alkenyl, C₂-C₂₀-alkynyl, C₃-C₁₂-cycloalkyl or C₆-C₂₀-aryl; or e.g. in case of -NR"2, the two substituents R" can form a ring, e.g. five- or six-membered ring, together with the nitrogen atom wherein they are attached to.
T is a bridge of 1-7 atoms, e.g. a bridge of 1-4 C-atoms and 0-4 heteroatoms, wherein the heteroatom(s) can be e.g. Si, Ge and/or O atom(s), whereby each of the bridge atoms may bear independently substituents, such as C₁-C₂₀-alkyl, tri(C₁-C₂₀-alkyl)silyl, tri(C₁-C₂₀-alkyl)siloxy or C₆-C₂₀-aryl substituents); or a bridge of 1-3, e.g. one or two, hetero atoms, such as silicon, germanium and/or oxygen atom(s), e.g. -SiR¹₂, wherein each R¹ is independently C₁-C₂₀-alkyl, C₆-C₂₀-aryl or tri(C₁-C₂₀-alkyl)silyl- residue, such as a trimethylsilyl-residue.
M is a transition metal of Group 4 to 6, such as Group 4, e.g. Ti, Zr or Hf.
Each A is independently a sigma-ligand, such as H, halogen, C₁-C₂₀-alkyl, C₁-C₂₀-alkoxy, C₂-C₂₀-alkenyl, C₂-C₂₀-alkynyl, C₃-C₁₂-cycloalkyl, C₆-C₂₀-aryl, C₆-C₂₀-aryloxy, C₇-C₂₀-arylalkyl, C₇-C₂₀-arylalkenyl, -CH₂-Y, wherein Y is C₆₋₂₀-aryl, C₆₋₂₀-heteroaryl, C₁₋₂₀-alkoxy, C₆₋₂₀-aryloxy, - NR"₂, -SiR"₃ or OSiR"₃, -SR", -PR"₃. -SiR"₃, -OSiR"₃ or -NR"₂; each R" is independently hydrogen or hydrocarbyl, e.g. C₁-C₂₀-alkyl, C₂-C₂₀-alkenyl, C₂-C₂₀-alkynyl, C₃-C₁₂-cycloalkyl or C₆-C₂₀-aryl; or e.g. in case of -NR"₂, the two substituents R" can form a ring, e.g. five- or six-membered ring, together with the nitrogen atom wherein they are attached to.
Each of the above mentioned ring moieties alone or as a part of a moiety as the substituent for Cp, A, R" or R¹ can further be substituted e.g. with C₁-C₂₀-alkyl which may contain Si and/or O atoms;
   n is 0, 1 or 2, e.g. 0 or 1,
   m is 1, 2 or 3, e.g. 1 or 2,
   q is 1, 2 or 3, e.g. 2 or 3, wherein m+q is equal to the
valency of M.

More preferably a metallocene compound of formula II

(Cp)₂MX₂ (II)

wherein both Cp are an optionally substituted or an optionally fused homo- or heterocyclopentadienyl ligand;
M is Zr or Hf;
and both X are -CH₂-Y, wherein Y is C₆₋₂₀-aryl, C₆₋₂₀-heteroaryl, C₁₋₂₀-alkoxy, C₆₋₂₀-aryloxy, -NR"₂, -SiR"₃ or OSiR"₃,
R" being a C₁₋₂₀ hydrocarbyl or in case of -NR₂, the two substituents R can form a ring together with the nitrogen atom wherein they are attached to.

In the formula (II) both Cp are an optionally substituted or an optionally fused homo- or heterocyclopentadienyl ligand, e.g. a substituted or unsubstituted cyclopentadienyl, a substituted or unsubstituted indenyl or a substituted or unsubstituted fluorenyl ligand.

Said optional substituent(s) present on the Cp group are selected from halogen, hydrocarbyl (e.g. C₁₋₂₀-alkyl, C₂₋₂₀-alkenyl, C₂₋₂₀-alkynyl, C₃₋₁₂-cycloalkyl, C₆₋₆₀-aryl or C₇₋₂₀-arylalkyl), C₃₋₁₂-heterocycloalkyl, C₅₋₂₀-heteroaryl, C₁₋₂₀-haloalkyl, -NR'₂, -SiR'₃ or OSiR'₃, R' being a C₁₋₂₀ hydrocarbyl (e.g. C₁₋₂₀-alkyl, C₂₋₂₀-alkenyl, C₂₋₂₀-alkynyl, C₃₋₁₂-cycloalkyl or C₆₋₂₀-aryl) or in case of -NR'₂, the two substituents R' can form a ring together with the nitrogen atom wherein they are attached to.

Cp preferably denotes cyclopentadienyl, indenyl, tetrahydroindenyl or fluorenyl, optionally substituted as defined above. More preferably Cp denotes cyclopentadienyl or tetrahydroindenyl.

In a preferred embodiment both Cp groups remain unsubstituted or are both substituted with the same number and kind of substituent.

Preferred substituents include C₁₋₂₀-alkyl, C₆₋₂₀-aryl or C₇₋₂₀-arylalkyl.

Especially preferably the Cp groups are unsubstituted or carry both a C₁₋₆-alkyl substituent such as methyl, ethyl, isopropyl or n-butyl.

M is Zr or Hf, especially preferably Hf.

Preferably both Y are selected from C₆₋₂₀-aryl, -NR"₂, -SiR"₃ or OSiR"₃, where R" is defined as above.

More preferably-CH₂-Y is benzyl or -CH₂-SiR"₃, with R" being C₁₋₆-alkyl or C₆₋₁₀-aryl.

Particularly preferred are the following compounds:
Bis(n-butylcyclopentadienyl)Hf dibenzyl,
Bis(methylcyclopentadienyl)Hf dibenzyl,
Bis(1,2-dimethylcyclopentadienyl)Hf dibenzyl,
Bis(n-propylcyclopentadienyl)Hf dibenzyl,
Bis(i-propylcyclopentadienyl)Hf dibenzyl,
Bis(1,2,4-trimethylcyclopentadienyl)Zr dibenzyl,
Bis(tetrahydroindenyl)Zr dibenzyl,
Bis(n-butylcyclopentadienyl)Hf (CH₂SiMe₃)₂,
Bis(n-propylcyclopentadienyl)Hf (CH₂SiMe₃)₂,
Bis(i-propylcyclopentadienyl)Hf (CH₂SiMe₃)₂
Bis(1,2,4-trimethylcyclopentadienyl)Zr(CH₂SiMe₃)₂,

Most preferred compound is Bis(n-butylcyclopentadienyl)Hf dibenzyl.

The preparation of the metallocenes used according to the invention can be carried out accordingly or analogously to methods known from the literature and is within skills of a person skilled in the field.

The metallocene compounds of formula I can be produced for example as described in EP 1 462 464.

The catalyst composition preferably used in the invention further comprises an alumoxane-impregnated support prepared by contacting an alumoxane or a modified alumoxane with silica as an inert carrier material. There are a variety of methods for preparing alumoxane and modified alumoxanes, non-limiting examples of which are described in U.S. Patent No. 4,665,208, 4,952,540, 5,091,352, 5,206,199, 5,204,419, 4,874,734, 4,924,018, 4,908,463, 4, 968, 827, 5, 308, 815, 5, 329, 032, 5, 248, 801, 5,235,081, 5,157,137, 5,103,031, 5, 391, 793, 5,391,529, 5,693,838, 5,731,253, 5,731,451 5,744,656 and European publications EP-A-0 561 476, EP-B1-0 279 586 and EP-A-0 594-218, and WO 94/10180.

Preferably, alumoxanes, particularly methylalumoxane or modified methylalumoxane, isobutylalumoxane, e.g. TIBAO (tetraisobutylalumoxane) or HIBAO (hexaisobutylalumoxane) are used to impregnate the support.

More preferably methylalumoxane (MAO) is used.

The mole ratio of the Al of the alumoxane component to the metal of the single site catalyst is in the range of between 0.3:1 to 2000:1, preferably 20:1 to 800:1, and most preferably 50:1 to 500:1.

Preferably silica is used as inert carrier. The surface area, pore volume and particle size of the silica can be chosen according to the requirements of the specific polymerization process, in which the catalysts will be used. Typically, silica particles having a surface area in the range of from about 10 to about 700 m²/g (BET method), pore volume in the range of from about 0.1 to about 6.0 cm³/g and average particle size in the range of from about 10 to about 500 µm can be used. The silica may be in granular, agglomerated, fumed or other form.

It is further preferred that the carrier material is calcinated, i.e. heat treated under air and then with a non-reactive gas such as nitrogen. This treatment is preferably done at a temperature in excess of 100 °C, more preferably 200 °C or higher, e.g. 200-800 °C, particularly about 600 °C. The calcination treatment is preferably effected for several hours, e.g. 2 to 30 hours, more preferably about 10 hours.

The alumoxane-impregnated support is obtained by contacting an alumoxane with silica and heating to a temperature from 50°C to 100°C. This alumoxane-containing silica is used as support for the metallocene of the formula (I) or (II). Preferably the alumoxane-impregnated support contains less than 15.0 wt% of aluminium, more preferably 9.0 to 14.5 wt% and most preferably 10.0 to 14.0 wt% of aluminium, based on the total weight of the support material and alumoxane.

The catalyst is preferably loaded onto the support material at from 0.05 to 4%, preferably 0.1 to 3.0%, especially 0.2 to 2.0%, by weight of active metal relative to the dry weight of the support material.

### Applications

The blend of the invention can be used to form pipes or other articles such as films or moulded products. Crucially, the invention allows the addition of small amounts of HMW component to be added to a blend. That component contributes to improved ESCR performance and by following the invention this can be achieved without any inhomogeneity in the blend.

Such blends are particularly suitable for the production of pipes, for moulding applications, and wire and cable applications.

The invention will now be defined in relation to the following non limiting examples and figures.

### Brief Description of the Figures

Figure 1 shows the light micrograph of blend H-30 showing phase segregation.
Figure 2 shows two peaks on the curve for the H-30 blend.
Figure 3 shows the light micrograph of blend 2.
Figure 4 shows the DSC of blend 2 which shows one peak on the curve.
Figure 5 shows the light micrograph of blend 3.
Figure 6 shows the DSC of blend 3 which shows a distinct shoulder on the curve.
Figure 7 shows the light micrograph of blend 4.
Figure 8 shows the DSC of blend 4 which shows one peak on the curve.
Figure 9 shows the screw configuration of the twin-screw extruder used in mixing.

### Experimental and Examples

### 1. Definitions and measurement methods

### GPC: Molecular weight averages, molecular weight distribution, and polydispersity index (Mn, Mw, MWD, PDI)

Molecular weight averages (Mw, Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4:2003 and ASTM D 6474-99. A Waters GPCV2000 instrument, equipped with differential refractive index detector and online viscosimeter was used with 2 x GMHXL-HT and 1x G7000HXL-HT TSK-gel columns from Tosoh Bioscience and 1,2,4-trichlorobenzene (TCB, stabilized with 250 mg/L 2,6-Di tert butyl-4-methyl-phenol) as solvent at 140 °C and at a constant flow rate of 1 mUmin. 209.5 µL of sample solution were injected per analysis. The column set was calibrated using universal calibration (according to ISO 16014-2:2003) with at least 15 narrow MWD polystyrene (PS) standards in the range of 1 kg/mol to 12 000 kg/mol. Mark Houwink constants for PS, PE and PP used are as per ASTM D 6474-99. All samples were prepared by dissolving 0.5 - 4.0 mg of polymer in 4 mL (at 140 °C) of stabilized TCB (same as mobile phase) and keeping for max. 3 hours at max. 160°C with continuous gentle shaking prior sampling into the GPC instrument.

**Density** of the polymer was determined according to ISO 1183-1987 method D on compression-moulded specimens.

### Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190°C and may be determined at different loadings such as 2.16 kg (MFR190/2), 5 kg (MFR190/5) or 21.6 kg (MFR190/21).

**Comonomer content** of the obtained products was measured in a known manner based on Fourier transform infrared spectroscopy (FTIR) calibrated with 13C-NMR, using Nicolet Magna 550 IR spectrometer together with Nicolet Omnic FTIR software.

Films having a thickness of about 220 to 250 µm were compression moulded from the samples. Similar films were made from calibration samples having a known content of the comonomer. The thicknesses were measured from at least five points of the film. The films were then rubbed with sandpaper to eliminate reflections. The films were not touched by plain hand to avoid contamination. For each sample and calibration sample at least two films were prepared. The films were pressed from pellets by using a Graceby Specac film press at 150 °C using 3 + 2 minutes preheating time, 1 minute compression time and 4 to 5 minutes cooling time. For very high molecular weight samples the preheating time may be prolonged or the temperature increased.

The comonomer content was determined from the absorbance at the wave number of approximately 1378 cm⁻¹. The comonomer used in the calibration samples was the same as the comonomer present in the samples. The analysis was performed by using the resolution of 2 cm⁻¹, wave number span of from 4000 to 400 cm⁻¹ and the number of sweeps of 128. At least two spectra were run from each film.

The comonomer content was determined from the spectrum from the wave number range of from 1430 to 1100 cm⁻¹. The absorbance is measured as the height of the peak by selecting the so-called short or long base line or both. The short base line is drawn in about 1410 - 1320 cm⁻¹ through the minimum points and the long base line about between 1410 and 1220 cm⁻¹. Calibrations need to be done specifically for each base line type. Also, the comonomer content of the unknown sample needs to be within the range of the comonomer contents of the calibration samples.

### DSC

The melting temperature Tm is measured with a Mettler TA820 differential scanning calorimetry device (DSC) on 3 ± 0.5 mg samples in accordance to ISO 11357-3:1999. Melting temperatures are obtained during 10°C/min cooling and heating scans between 30°C and 225°C. Melting temperatures were taken as the peaks of the endotherms and exotherms.

### Light Microscopy

Light microscopy was carried out from the formed polymer using thin sections of around 20 microns in thickness.

### Example 1

In order to determine the miscibility window in the LMW/HMW blends, binary blends were prepared by choosing a HMW homopolymer fraction B) and a LMW copolymer fraction A) with high comonomer content.

To observe the influence of a third polymer component, two different series of ternary blends were prepared by blending the pure components of the binary blends mentioned above with a MMW copolymer fraction C), or a MMW homopolymer fraction C.

### 2. Catalyst preparation

### Example 2.1: Metallocene complex preparation:

The catalyst complex used in the polymerisation examples was bis(n-butyl cyclopentadienyl)hafnium dibenzyl, (n-BuCp)₂Hf(CH₂Ph)₂, and it was prepared according to "Catalyst Preparation Example 2" of WO2005/002744, starting from bis(n-butyl cyclopentadienyl)hafnium dichloride (supplied by Witco).

The catalyst preparation was made in a 160 L batch reactor into which a metallocene complex solution was added. Mixing speed was 40 rpm during reaction and 20 rpm during drying. Reactor was carefully flushed with toluene prior to reaction and inertized with nitrogen after silica addition

### Example 2.2: Preparation of catalyst composition

10.0 kg activated silica (commercial silica carrier, XPO2485A, having an average particle size 20µm, supplier: Grace) were first slurried into 21.7 kg dry toluene at room temperature. Then the silica slurry was added to 14.8 kg of 30 wt% methylalumoxane in toluene (MAO, supplied by Albemarle) during 3 hours. Afterwards the MAO/silica mixture is heated to 79°C for 6 hours and then cooled down to room temperature again.

The resulting solution was reacted with 0.33 kg of (n-BuCp)₂Hf(CH₂Ph)₂ in toluene (67,9 wt%) for 8 hours at room temperature.

The catalyst was dried under nitrogen purge for 5.5 hours at 50°C.

The obtained catalyst had an Al/Hf mol-ratio of 200, an Hf-concentration of 0.44 wt% and an Al-concentration of 13.2 wt%.

### 3. Polyethylene components

### Example 3.1 Preparation of Fractions A, B and C

The low molecular weight ethylene copolymer fraction A (LMW_{c}-fraction), a medium molecular weight ethylene homo/copolymer fraction (MMW-fraction) and a high molecular weight ethylene homopolymer fraction (HMWₕ-fraction) were produced separately in a plant having a prepolymerization reactor (loop type prepolymerizer 0.05 m³) and a loop reactor (0.5 m³). The above prepared catalyst was fed into the prepolymerization reactor as 15 wt% oil slurry (primol 352). Further reaction parameters are disclosed in Table 1.

**Table 1:**

| **Fraction** | **LMW_{c}** | **MMW_{b}** | **MMWₐ** | **HMWₕ** |
|---|---|---|---|---|
| **Prepolymerization** | | | | |
| **T [°C]** | 60 | | 60 | 60 |
| **Pressure [bar]** | 58 | 60 | 59 | 60 |
| **Catalyst feed [g/h]** | 19,9 | 29.7 | 31.3 | 30,9 |
| **Antistatic feed [ppm] Octastat 3000** | 0 | 5.0 | 0 | 5,0 |
| **Ethylene-feed [kg/]** | 0 | 2 | 0 | 2.0 |
| **H₂-feed [g/h]** | 0 | 1 | 0 | 0.7 |
| **Propane-feed [kg/h]** | 34.3 | 47 | 34.3 | 47.4 |

| **Loop** | | | | |
|---|---|---|---|---|
| **T[°C]** | 74 | 85 | 85 | 85 |
| **Pressure [bar]** | 57 | 57 | 57 | 56 |
| **Ethylene (C₂)-feed [kg/]** | 35 | 37 | 38 | 34 |
| **H₂-feed [g/h]** | 12 | 1.8 | 1.2 | 0 |
| **Hexene(C₆)-feed [kg/h]** | 5.2 | 0 | 2.3 | 0 |
| **Propane-feed [kg/h]** | 67 | 82 | 67 | 82 |
| **C₂-concentration [mol%]** | 6.2 | 6.2 | 4.8 | 5.9 |
| **H₂/C₂-ratio [mol/kmol]** | 0.5 | 0.07 | 0.09 | 0.02 |
| **C₆/C₂-ratio [mol/kmol]** | 219 | - | 106 | - |
| **Production rate [kg/h]** | 33.4 | 34.0 | 37.7 | 31.0 |

| **Properties** | | | | |
|---|---|---|---|---|
| **Irganox B225 added [ppm]** | 2000 | 2000 | 2000 | 2000 |
| **MFR_{190/2}[g/10 min]** | 370 | 0.93 | 0.7 | - |
| **MFR_{190/21} [g/10 min]** | - | 17 | 13 | 0.88 |
| **Density [kg/m³]** | 922 | 955 | 923 | 944 |
| **M_{w} [kg/mol]** | 24 | 129 | 135 | 294 |
| **C₆-content [wt%]** | 8.3 | - | 4.6 | - |

The following materials were therefore used:

| | | MFR2 | Mw | MWD | Tm | C6 | density |
|---|---|---|---|---|---|---|---|
| **LMW** | Unimodal copo | 370 | 24,000 | 4.3 | 118.7 | 8.3 | 922 |
| **HMW** | Uni homo | 0.04 | 294000 | 2.4 | 134.3 | - | 944 |
| **MMWa** | Uni copo | 0.7 | 135000 | 2.3 | 119.1 | 4.6 | 923 |
| **MMWb** | Uni homo | 0.93 | 129000 | 2.6 | 133.9 | - | 955 |

### 3.2. Preparation of the polyethylene blend

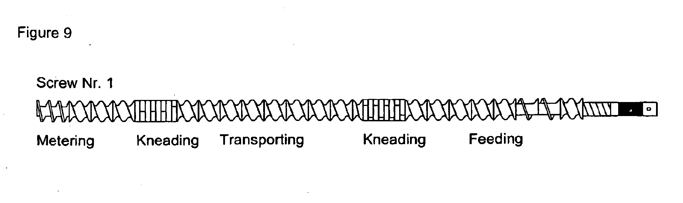

The three fractions were blended and melt-homogenized in an extruder. Compounding was done by the kneading on an intermeshing co-rotating twin screw extruder Prism TSE 16 having a screw diameter D of 16 mm and an L/D ratio of 25, using high intensity mixing screws equipped with kneading blocks (see Figure 9). The temperature profile along the screw length was set to 210°C / 215°C / 220°C / 215°C / 210°C, using an output rate: of 1-1.5 kg/hr and a screw speed of 200 RPM. Each composition was extruded twice to ensure proper homogenization.. The following blends were prepared:

### Binary Blends (comparative)

| Blend | LMW wt% | HMW wt% | Melting Tm °C |
|---|---|---|---|
| H-90 | 10 | 90 | Not processable |
| H-70 | 30 | 70 | 132 |
| H-50 | 50 | 50 | 129 |
| H-30 | 70 | 30 | Inhomogeneous |
| H-10 | 90 | 10 | Inhomogeneous |

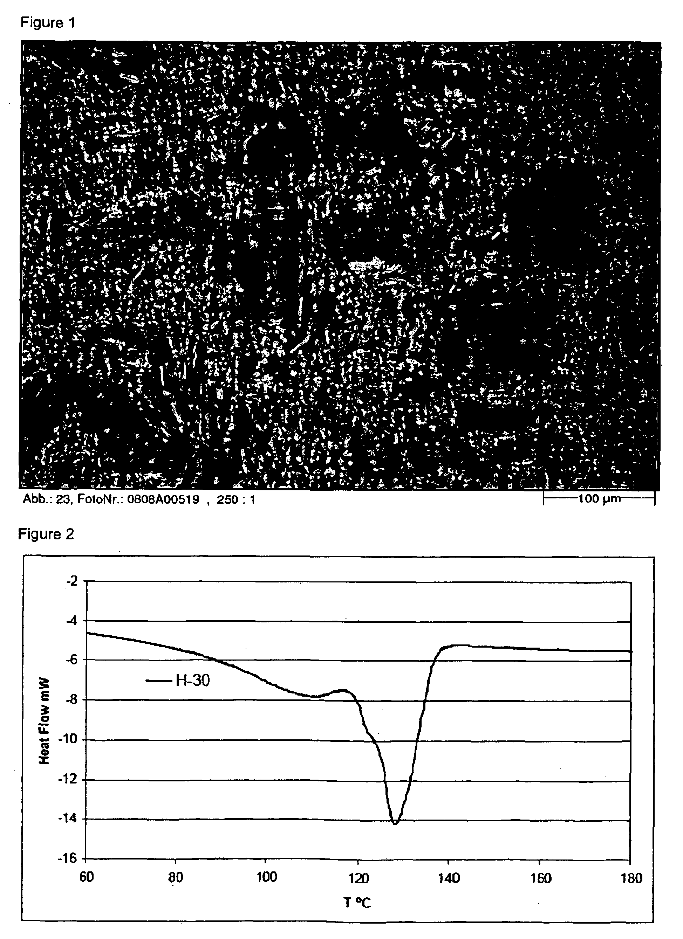

Figure 1 shows the light micrograph of H-30 showing phase segregation. DSC (Figure 2) shows two peaks on the melting curve. There is a distinct shoulder at Tm 108°C. This blend is not homogeneous. As the HMW component decreases in amount, the homogeneity gets progressively worse.

### Ternary blends

| Blend | LMW wt% | MMWa wt% | MMWb wt% | HMW wt% | Tm °C |
|---|---|---|---|---|---|
| 1 | 20 | 20 | | 60 | 131 |
| 2 | 40 | 20 | | 40 | 128.2 |
| 3# | 60 | 20 | | 20 | inhomogeneous |
| 4 | 20 | 60 | | 20 | 124.7 |
| 5 | 20 | | 20 | 60 | 133 |
| 6 | 40 | | 20 | 40 | 130 |
| 7# | 60 | | 20 | 20 | inhomogeneous |
| 8 | 20 | | 60 | 20 | 133 |

| | | | | | |
|---|---|---|---|---|---|
| # comparative examples | | | | | |

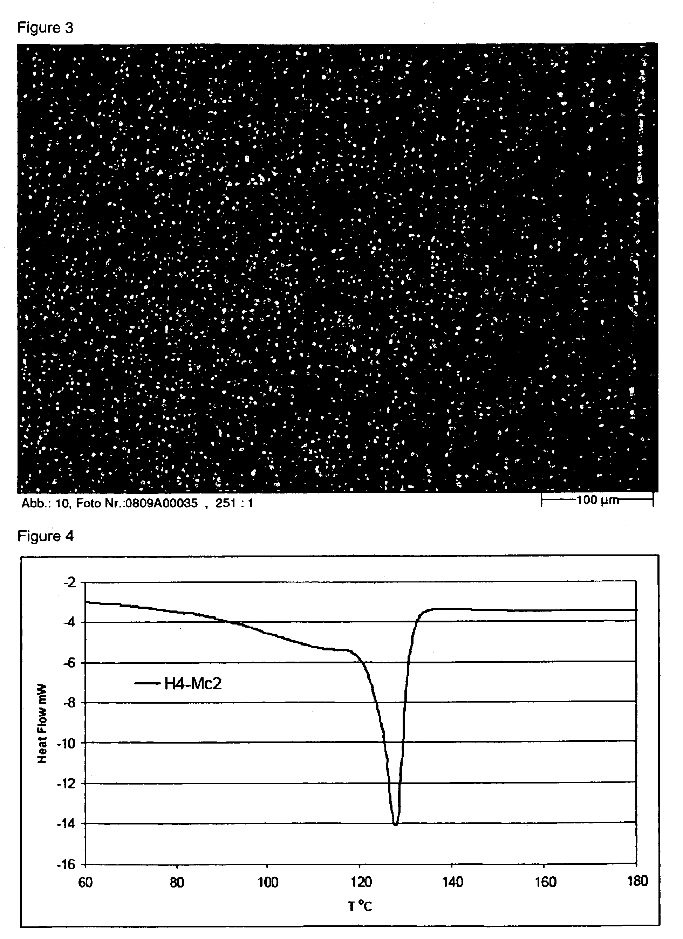

Figure 3 shows the light micrograph of blend 2. DSC of blend 2 (figure 4) shows one peak on the melting curve. This blend is homogeneous.

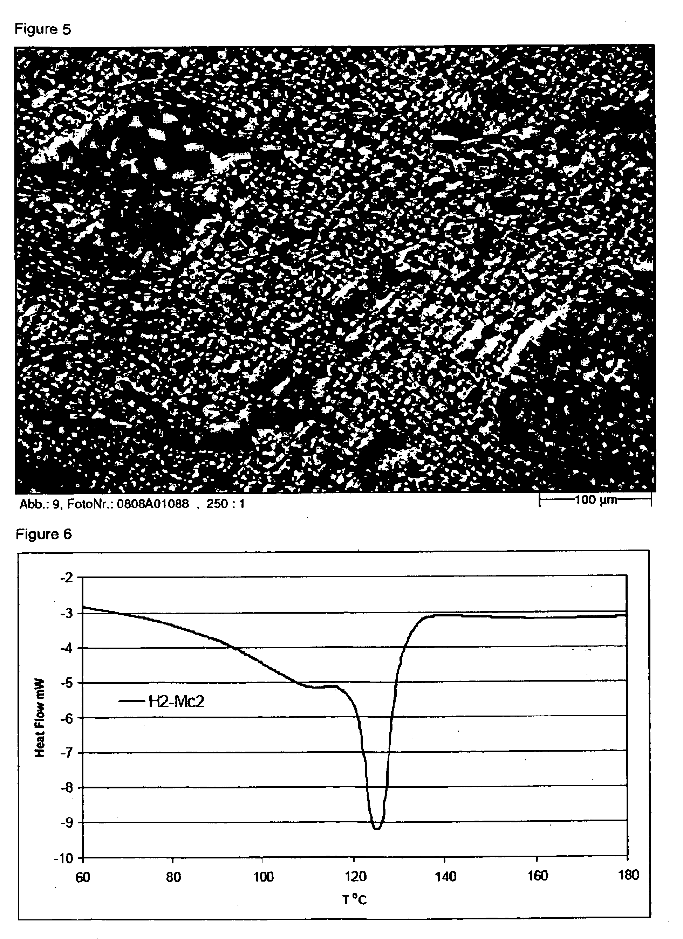

Figure 5 shows the light micrograph of blend 3 exhibiting local inhomogeneity. DSC of blend 3 (figure 6) shows a distinct shoulder on the melting curve. This blend is not homogeneous.

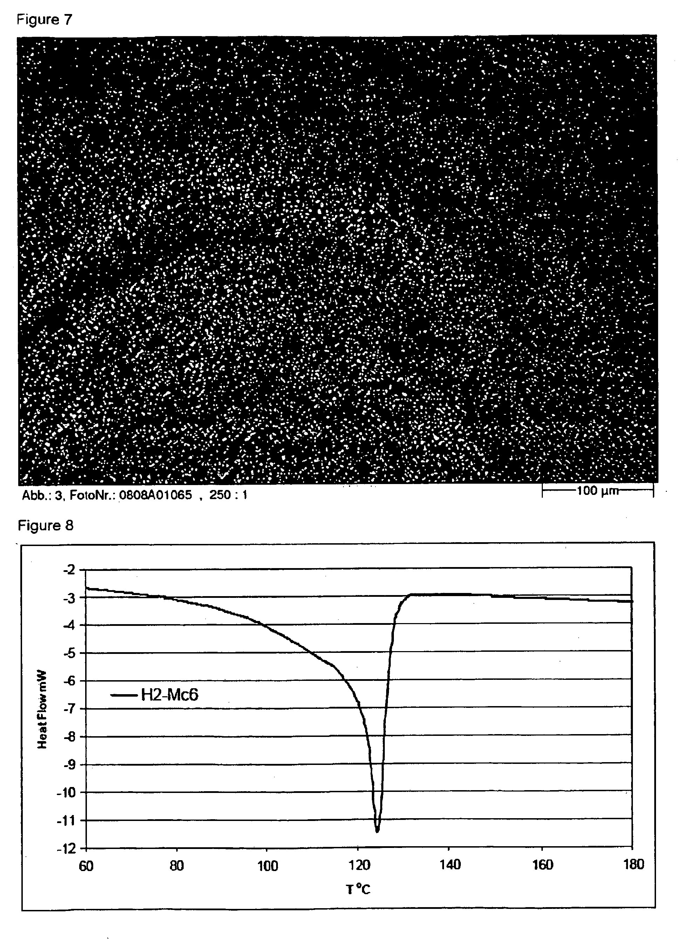

Figure 7 shows the light micrograph of blend 4. DSC of blend 4 (figure 8) shows one peak on the melting curve. This blend is homogeneous.

The blends of the invention therefore exhibit a single melting point in DSC and are homogeneous.

## Claims

1. A polyethylene blend consisting essentially of three ethylene homo- or copolymer fractions (A), (B) and (C) having distinct molecular weights:
A) 10 to 50 wt% of a low molecular weight homo- or copolymer fraction with a weight average molecular weight M_{w} below 40 kg/mol;
B) 18 to 60 wt% of a high molecular weight homo- or copolymer fraction with a weight average molecular weight M_{w} above 250 kg/mol and
C) 10 to 70 wt% of a medium molecular weight homo- or copolymer fraction with a weight average molecular weight M_{w} in the range of 100 to 200 kg/mol;
whereby the polyethylene blend has a single melting peak, as determined by differential scanning calorimetry (DSC).

2. A polyethylene blend as claimed in claim 1 consisting essentially of three ethylene homo- or copolymer fractions (A), (B) and (C) having distinct molecular weights:
A) 10 to 50 wt% of a low molecular weight homo or copolymer fraction with a weight average molecular weight M_{w} below 40 kg/mol;
B) 18 to 40 wt% of a high molecular weight homopolymer fraction with a weight average molecular weight M_{w} above 250 kg/mol and a density of greater than 940 kg/m³; and
C) 10 to 70 wt% of a medium molecular weight homo- or copolymer fraction with a weight average molecular weight M_{w} in the range of 100 to 200 kg/mol;
whereby the polyethylene blend has a single melting peak, as determined by differential scanning calorimetry (DSC).

3. A polyethylene blend as claimed in any preceding claim comprising 18 to 40 wt% of fraction B, preferably 18 to 30 wt%.

4. A polyethylene blend as claimed in any preceding claim wherein fraction B is a homopolymer.

5. A polyethylene blend as claimed in any preceding claim wherein the weight percentage of either fraction B or fraction C (or both) exceeds that of fraction A.

6. A polyethylene blend as claimed in any preceding claim wherein fraction A is a copolymer, especially an ethylene hexene copolymer.

7. A polyethylene blend as claimed in any preceding claim wherein the density of fraction C is 940 to 960 kg/m³.

8. A polyethylene blend as claimed in any preceding claim wherein the blend has a melting point of 127 to 135°C.

9. A polyethylene biend as claimed in any preceding claim wherein each fraction forms at least 15 wt% of the blend.

10. A polyethylene blend as claimed in any preceding claim wherein fraction A is a copolymer, fraction B is a homopolymer and fraction B forms at least 18 wt% of the composition.

11. A composition comprising a blend as claimed in any one of claims 1 to 10.

12. An article comprising the blend of claims 1 to 10 such as a film, moulding, wire cable or pipe.

13. A method for improving the homogeneity of a polyethylene blend comprising mixing three ethylene homo- or copolymer fractions (A), (B) and (C) having distinct molecular weights:
A) 10 to 50 wt% of a low molecular weight homo- or copolymer fraction with a weight average molecular weight M_{w} below 40 kg/mol;
B) 18 to 60 wt% of a high molecular weight homo- or copolymer fraction with a weight average molecular weight M_{w} above 250 kg/mol; and
C) 10 to 70 wt% of a medium molecular weight homo- or copolymer fraction with a weight average molecular weight M_{w} in the range of 100 to 200 kg/mol;
whereby the polyethylene blend has a single melting peak, as determined by differential scanning calorimetry (DSC).

14. A method to expand the miscibility window for blending a low molecular weight homo-or copolymer fraction A) with a weight average molecular weight M_{w} below 40 kg/mol and a high molecular weight homo- or copolymer fraction B) with a weight average molecular weight M_{w} above 250 kg/mol, comprising adding a medium molecular weight homo- or copolymer fraction C) with a weight average molecular weight M_{w} in the range of 100 to 200 kg/mol so that the polyethylene blend comprises 10 to 50 wt% of fraction A), 18 to 60 wt% of fraction B) and 10 to 70 Wt% of fraction C) and whereby the polyethylene blend has a single melting peak, as determined by differential scanning calorimetry (DSC).

15. A process for the preparation of a polyethylene blend as claimed in any one of claims 1 to 10 comprising blending :
A) 10 to 50 wt% of a low molecular weight homo- or copolymer fraction with a weight average molecular weight M_{w} below 40 kg/mol;
B) 18 to 60 wt% of a high molecular weight homo- or copolymer fraction with a weight average molecular weight M_{w} above 250 kg/mol and
C) 10 to 70 wt% of a medium molecular weight homo- or copolymer fraction with a weight average molecular weight M_{w} in the range of 100 to 200 kg/mol so as to form a blend having a single melting peak, as determined by differential scanning calorimetry (DSC).

16. A polyethylene blend consisting essentially of three ethylene homo- or copolymer fractions (A), (B) and (C) having distinct molecular weights:
A) 10 to 50 wt% of a lower molecular weight homo- or copolymer fraction with a weight average molecular weight M_{w} below 40 kg/mol;
B) 18 to 60 wt%, preferably 18 to 40 wt% of a higher molecular weight homo- or copolymer fraction with an MFR_{190/21} of less than 10 g/10min; and
C) 10 to 70 wt% of a medium molecular weight homo- or copolymer fraction with an MFR_{190/21} greater than that of fraction B and being in the range of 5 to 50 g/10min;
whereby the polyethylene blend has a single melting peak, as determined by differential scanning calorimetry (DSC).

## Patentansprüche

1. Polyethylenmischung, bestehend im Wesentlichen aus drei Ethylen-Homo-oder Copolymerfraktionen (A), (B) und (C), die bestimmte Molekulargewichte haben:
A) 10 bis 50Gew.-% einer Homo- oder Copolymerfraktion mit niedrigem Molekulargewicht mit einem Gewichtsmittel des Molekulargewichts M_{w} von unter 40 kg/mol;
B) 18 bis 60 Gew.-% einer Homo- oder Copolymerfraktion mit hohem Molekulargewicht mit einem Gewichtsmittel des Molekulargewichts M_{w} von über 250 kg/mol; und
C) 10 bis 70 Gew.-% einer Homo- oder Copolymerfraktion mit mittlerem Molekulargewicht mit einem Gewichtsmittel des Molekulargewichts M_{w} im Bereich von 100 bis 200 kg/mol;
wobei die Polyethylenmischung einen einzigen Schmelzpeak hat, bestimmt mittels Differential-Scanning-Kalorimetrie (DSC).

2. Polyethylenmischung nach Anspruch 1, bestehend im Wesentlichen aus drei Ethylen-Homo- oder Copolymerfraktionen (A), (B) und (C), die bestimmte Molekulargewichte haben:
A) 10 bis 50 Gew.-% einer Homo- oder Copolymerfraktion mit niedrigem Molekulargewicht mit einem Gewichtsmittel des Molekulargewichts M_{w} von unter 40 kg/mol;
B) 18 bis 40 Gew.-% einer Homopolymerfraktion mit hohem Molekulargewicht mit einem Gewichtsmittel des Molekulargewichts M_{w} von über 250 kg/mol und einer Dichte von größer als 940 kg/m³*;* und
C) 10 bis 70 Gew.-% einer Homo- oder Copolymerfraktion mit mittlerem Molekulargewicht mit einem Gewichtsmittel des Molekulargewichts M_{w} im Bereich von 100 bis 200 kg/mol;
wobei die Polyethylenmischung einen einzigen Schmelzpeak hat, bestimmt
mittels Differential Scanning-Kalorimetrie (DSC).

3. Polyethylenmischung nach einem der vorhergehenden Ansprüche, umfassend 18 bis 40 Gew.-%, vorzugsweise 18 bis 30 Gew.-%, der Fraktion B.

4. Polyethylenmischung nach einem der vorhergehenden Ansprüche, wobei die Fraktion B ein Homopolymer ist.

5. Polyethylenmischung nach einem der vorhergehenden Ansprüche, wobei der Gewichtsprozentsatz von entweder der Fraktion B oder der Fraktion C (oder von beiden) den der Fraktion A übersteigt.

6. Polyethylenmischung nach einem der vorhergehenden Ansprüche, wobei die Fraktion A ein Copolymer ist, insbesondere eine Ethylen-Hexen-Copolymer.

7. Polyethylenmischung nach einem der vorhergehenden Ansprüche, wobei die Dichte der Fraktion C 940 bis 960 kg/m³ ist.

8. Polyethylenmischung nach einem der vorhergehenden Ansprüche, wobei die Mischung einen Schmelzpunkt von 127 bis 135 °C hat.

9. Polyethylenmischung nach einem der vorhergehenden Ansprüche, wobei jede Fraktion mindestens 15 Gew.-% der Mischung ausmacht.

10. Polyethylenmischung nach einem der vorhergehenden Ansprüche, wobei die Fraktion A ein Copolymer ist, die Fraktion B ein Homopolymer ist und die Fraktion B mindestens 18 Gew.-% der Zusammensetzung ausmacht.

11. Zusammensetzung, umfassend eine Mischung nach einem der Ansprüche 1 bis 10.

12. Artikel, umfassend die Mischung nach einem der Ansprüche 1 bis 10, wie zum Beispiel eine Folie, Formteil, Leiterkabel oder Rohr.

13. Verfahren zur Verbesserung der Homogenität von einer Polyethylenmischung, umfassend das Mischen von drei Ethylen-Homo- oder Copolymerfraktionen (A), (B) und (C), die bestimmte Molekulargewichte haben:
A)10 bis 50 Gew.-% einer Homo- oder Copolymerfraktion mit niedrigem Molekulargewicht mit einem Gewichtsmittel des Molekulargewichts M_{w} von unter 40 kg/mol;
B) 18 bis 60 Gew.-% einer Homo- oder Copolymerfraktion mit hohem Molekulargewicht mit einem Gewichtsmittel des Molekulargewichts M_{w} von über 250 kg/mol; und
C) 10 bis 70Gew.-% einer Homo- oder Copolymerfraktion mit mittlerem Molekulargewicht mit einem Gewichtsmittel des Molekulargewichts M_{w} im Bereich von 100 bis 200 kg/mol;
wobei die Polyethylenmischung einen einzigen Schmelzpeak hat, bestimmt mittels Differential-Scanning-Kalorimetrie (DSC).

14. Verfahren zum Erweitern des Mischbarkeitsfensters zum Mischen einer Homo- oder Copolymerfraktion A) mit niedrigem Molekulargewicht mit einem Gewichtsmittel des Molekulargewichts M_{w} von unter 40 kg/mol und einer Homo- oder Copolymerfraktion B) mit hohem Molekulargewicht mit einem Gewichtsmittel des Molekulargewichts M_{w} von über 250 kg/mol, umfassend das Zugeben einer Homo- oder Copolymerfraktion C) mit mittlerem Molekulargewicht mit einem Gewichtsmittel des Molekulargewichts M_{w} im Bereich von 100 bis 200 kg/mol, sodass die Polyethylenmischung 10 bis 50 Gew.-% der Fraktion A), 18 bis 60 Gew.-% der Fraktion B) und 10 bis 70 Gew.-% der Fraktion C) umfasst und wobei die Polyethylenmischung einen einzigen Schmelzpeak hat, bestimmt mittels Differential-Scanning-Kalorimetrie (DSC).

15. Verfahren zur Herstellung einer Polyethylen mischung nach einem der vorhergehenden Ansprüche 1 bis 10, umfassend das Mischen von:
A) 10 bis 50 Gew.-% einer Homo- oder Copolymerfraktion mit niedrigem Molekulargewicht mit einem Gewichtsmittel des Molekulargewichts M_{w} von unter 40 kg/mol;
B) 18 bis 60 Gew.-% einer Homo- oder Copolymerfraktion mit hohem Molekulargewicht mit einem Gewichtsmittel des Molekulargewichts M_{w} von über 250 kg/mol; und
C) 10 bis 70 Gew.-% einer Homo- oder Copolymerfraktion mit mittlerem Molekulargewicht mit einem Gewichtsmittel des Molekulargewichts M_{w} im Bereich von 100 bis 200 kg/mol, um eine Mischung zu bilden, die einen einzigen Schmelzpeak hat, bestimmt mittels Differential-Scanning-Kalorimetrie (DSC)

16. Polyethylenmischung, bestehend im Wesentlichen aus drei Ethylen-Homo- oder Copolymerfraktionen (A), (B) und (C), die bestimmte Molekulargewichte haben:
A) 10 bis 50 Gew.-% einer Homo- oder Copolymerfraktion mit niedrigerem Molekulargewicht mit einem Gewichtsmittel des Molekulargewichts M_{w} von unter 40 kg/mol;
B) 18 bis 60 Gew.-%, vorzugsweise 18 bis 40 Gew.-%, einer Homo- oder Copolymerfraktion mit höherem Molekulargewicht mit einem MFR_{190/21} von weniger als 10 g/10 min; und
C) 10 bis 70 Gew.-% einer Homo- oder Copolymerfraktion mit mittlerem Molekulargewicht mit einem MFR_{190/21}, der höher ist als der der Fraktion B und in einem Bereich von 5 bis 50 g/10 min ist;
wobei die Polyethylenmischung einen einzigen Schmelzpeak hat, bestimmt mittels Differential-Scanning-Kalorimetrie (DSC).

## Revendications

1. Mélange de polyéthylène constitué essentiellement de trois fractions d'homo- ou copolymère d'éthylène (A), (B) et (C) ayant des poids moléculaires distincts :
A) 10 à 50 % en poids d'une fraction d'homo- ou copolymère de faible poids moléculaire avec une poids moléculaire moyen en poids M_{w} inférieur à 40 kg/mole ;
B) 18 à 60 % en poids d'une fraction d'homo- ou copolymère de poids moléculaire élevé avec un poids moléculaire moyen en poids M_{w}supérieur à 250 kg/mole et
C) 10 à 70 % en poids d'une fraction d'homo- ou copolymère de poids moléculaire moyen avec un poids moléculaire moyen en poids M_{w} dans la plage de 100 à 200 kg/mole ;
de sorte que le mélange de polyéthylène ait un seul
pic de fusion, comme déterminé par calorimétrie par balayage différentiel (DSC).

2. Mélange de polyéthylène selon la revendication 1 constitué essentiellement de trois fractions d'homo- ou copolymère d'éthylène (A), (B) et (C) ayant des poids moléculaires distincts ;
A) 10 à 50 % en poids d'une fraction d'homo- ou copolymère de faible poids moléculaire avec un poids moléculaire moyen en poids M_{w} inférieur à 40 kg/mole ;
B) 18 à 40 % en poids d'une fraction d'homo- ou copolymère de poids moléculaire élevé avec un poids moléculaire moyen en poids M_{w} supérieur à 250 kg/mole et une masse volumique supérieure à 940 kg/m³;
C) 10 à 70 % en poids d'une fraction d'homo- ou copolymère de poids moléculaire moyen avec un poids moléculaire moyen en poids M_{w} dans la plage de 100 à 200 kg/mole ;
de sorte que le mélange de polyéthylène ait un seul
pic de fusion, comme déterminé par colorimétrie par balayage différentiel (DSC).

3. Mélange de polyéthylène selon l'une quelconque des revendications précédentes, comprenant 18 à 40 % en poids de la fraction B, de préférence 18 à 30 % en poids.

4. Mélange de polyéthylène selon l'une quelconque des revendications précédentes, dans lequel la fraction B est un homopolymère.

5. Mélange de polyéthylène selon l'une quelconque des revendications précédentes, dans lequel le pourcentage en poids de la fraction B ou de la fraction C (ou des deux) dépasse celui de la fraction A.

6. Mélange de polyéthylène selon l'une quelconque des revendications précédentes, dans lequel la fraction A est un copolymère, en particulier une copolymère d'éthylène et d'hexène.

7. Mélange de polyéthylène selon l'une quelconque des revendications précédentes, dans lequel la masse volumique de la fraction C est de 940 à 960 kg/m³.

8. Mélange de polyéthylène selon l'une quelconque des revendications précédentes, dans lequel le mélange a un point de fusion de 127 à 135 °C.

9. Mélange de polyéthylène selon l'une quelconque des revendications précédentes, dans lequel chaque fraction forme au moins 15 % en poids du mélange.

10. Mélange de polyéthylène selon l'une quelconque des revendications précédentes, dans lequel la fraction A est un copolymère, la fraction B est un homopolymère et la fraction B forme au moins 18 % en poids de la composition.

11. Composition comprenant un mélange selon l'une quelconque des revendications 1 à 10.

12. Article comprenant le mélange des revendications 1 à 10, notamment un film, un moulage, un câble métallique ou un tuyau.

13. Procédé permettant d'améliorer l'homogénéité d'un mélange de polyéthylène comprenant le mélange de trois fractions d'homo- ou copolymère d'éthylène (A), (B) et (C) ayant des poids moléculaires distincts :
A) 10 à 50 % en poids d'une fraction d'homo- ou copolymère de faible poids moléculaire avec un poids moléculaire moyen en poids M_{w} inférieur à 40 kg/mole ;
B) 18 à 60 % en poids d'une fraction d'homo- ou copolymère de poids moléculaire élevé avec un poids moléculaire moyen en poids M_{w} supérieur à 250 kg/mole ; et
C) 10 à 70 % en poids d'une fraction d'homo- ou copolymère de poids moléculaire moyen avec un poids moléculaire moyen en poids M_{w} dans la plage de 100 à 200 kg/mole ;
de sorte que le mélange de polyéthylène ait un seul
pic de fusion, comme déterminé par calorimétrie par balayage différentiel (DSC).

14. Procédé permettant de renforcer la fenêtre de miscibilité pour mélanger une fraction d'homo- ou copolymère de faible poids moléculaire A) avec un poids moléculaire moyen en poids M_{w} inférieur à 40 kg/mole et une fraction d'homo- ou copolymère de poids moléculaire élevé B) avec un poids moléculaire moyen en poids M_{w} supérieur à 250 kg/mole, comprenant l'addition d'une fraction d'homo- ou copolymère de poids moléculaire moyen C) avec un poids moléculaire moyen en poids M_{w} dans la plage de 100 à 200 kg/mole de aorte que le mélange de polyéthylène comprenne 10 à 50 % en poids de la fraction A), 18 à 60 % en poids de la fraction B) et 10 à 70 % en poids de la fraction C) et de sorte que le mélange de polyéthylène ait un seul pic de fusion, comme déterminé par calorimétrie par balayage différentiel (DSC).

15. Procédé de préparation d'un mélange de polyéthylène selon l'une quelconque des revendications 1 à 10 comprenant le mélange des composants suivantes :
A) 10 à 50 % en poids d'une fraction d'homo- ou copolymère de faible poids moléculaire avec un poids moléculaire moyen en poids M_{w} inférieur à 40 kg/mole ;
B) 18 à 60 % en poids d'une fraction d'homo- ou copolymère de poids moléculaire élevé avec un poids moléculaire moyen en poids M_{w} supérieur à 250 kg/mole et
C) 10 à 70 % en poids d'une fraction d'homo- ou copolymère de poids moléculaire moyen avec un poids moléculaire moyen en poids dans la plage de 100 à 200 kg/mole de manière à former un
mélange ayant un seul pic de fusion, comme déterminé par calorimétrie par balayage différentiel (DSC).

16. Mélange de polyéthylène constitué essentiellement de trois fractions d'homo- ou copolymère d'éthylène (A), (B) et (C) ayant des poids moléculaires distincts :
A) 10 à 50 % en poids d'une fraction d'homo- ou copolymère de faible poids moléculaire avec un poids moléculaire moyen en poids M_{w} inférieur à 40 kg/mole ;
B) 18 à 60 % en poids, de préférence 16 à 40 % en poids d'une fraction d'homo- ou copolymère de poids moléculaire élevé ayant un MFR_{190/21} inférieur à 10 g/10 min ; et
C) 10 à 70 % en poids d'une fraction d'homo- ou copolymère de poids moléculaire moyen avec un MFR_{190/21} supérieur à celui de la fraction B et qui se situe dans la plage de 5 à 50 g/10 min ;
de sorte que le mélange de polyéthylène agit un seul
pic de fusion, comme déterminé par calorimétrie par balayage différentiel (DSC).
